# EUROPEAN PATENT SPECIFICATION

(11) **EP 4 117 803 B1**
(45) Date of publication and mention of the grant of the patent: **14.08.2024**
(21) Application number: 21716852.5
(22) Date of filing: 11.03.2021
(51) Int. Cl.: B01D 46/00, B01D 46/24

(54) **FILTER CARTRIDGE FOR AN AIR FILTER FOR INTERNAL COMBUSTION ENGINES AND FILTER ASSEMBLY COMPRISING SAID CARTRIDGE**
FILTERPATRONE FÜR EINEN LUFTFILTER FÜR VERBRENNUNGSMOTOREN UND FILTERANORDNUNG MIT BESAGTER KARTUSCHE
CARTOUCHE FILTRANTE POUR FILTRE À AIR POUR MOTEURS À COMBUSTION INTERNE ET ENSEMBLE FILTRANT COMPRENANT LADITE CARTOUCHE

(30) Priority: 12.03.2020 IT 202000005353
(43) Date of publication of application: 18.01.2023
(73) Proprietor: Officine Metallurgiche G. Cornaglia S.p.A., 10092 Beinasco (TO) (IT)
(72) Inventor: CORNAGLIA, Umberto, 10092 Beinasco (TO) (IT); GOTELLI, Mauro, 10092 Beinasco (TO) (IT); VITAGLIANI, Paolo, 10092 Beinasco (TO) (IT); VOLPIANO, Alessandro, 10092 Beinasco (TO) (IT)
(74) Representative: Robba, Pierpaolo
(86) International application number: PCT/IB2021/052036
(87) International publication number: WO 2021/181326

(56) References cited:
- EP-A2- 1 843 035
- DE-A1- 102011 015 018
- US-A1- 2004 231 304
- US-A1- 2005 076 621
- US-A1- 2016 144 310

## Description

### Technical Field

The present invention relates to a filter cartridge for an air filter of internal combustion engines, and in particular, it relates to a filter cartridge provided with an air conveyor. Even more particularly, the present invention relates to a cylindrical (or annular) interchangeable filter cartridge provided with an air conveyor integrated therewith.

The present invention further relates to an air filter assembly intended for internal combustion engines and comprising said filter cartridge.

### Background Art

In the field of internal combustion engines, especially for use in the automotive industry, air filters are known having an interchangeable filter cartridge having in turn a filter element, said filter cartridge being accommodated in a housing. The housing of known air filters comprises an inlet for the entrance of air, so called "dirty" air, sucked from the outer environment, and an outlet for the exit of air, so-called "clean" air, towards the engine. The filter housing is configured so as to define, within the filter, an essentially forced path for the air, whereby substantially all of the air sucked at the inlet passes through the filter element and is discharged from the filter through the outlet. When passing through the filter element, dust particles and other foreign matter, which could damage the engine and other components involved, become separated from the passing airflow, and the air exiting the filter is therefore purified and suitable for injection into the combustion chambers of an internal combustion engine. Examples for air filters are disclosed in EP1843035, US2005/076621, US2004/231304 and DE102011015018.

Typically, the filter element is made of pleated paper, or other suitable materials known to the person skilled in the art. In addition, the filter element is typically provided with a sealing gasket, for example made of rubber, or polyurethane foam, which serves to ensure the required tightness inside the filter, preventing dirty air, especially coming from the outer environment, from being introduced into the portion of the intake circuit of the internal combustion engine arranged downstream of the filter, thus by-passing the filter cartridge.

One of the drawbacks encountered in the manufacturing of a filter having an interchangeable filter cartridge is the poor performance of the filter as far as the requirements of the flow gauge (or flowmeter) arranged at an air intake duct for sucking air from the outlet provided in the housing of the air filter are concerned. Indeed, it is known that the amount of incoming air is one of the most important parameters in managing an internal combustion engine, whereby measurement thereof within the air intake duct is required. One of the problems encountered in the manufacturing of an air filter for internal combustion engines having an interchangeable cartridge is therefore how to obtain a uniform path for the air, the so-called "clean" air, in order to improve the performance of the air filter as far as the requirements of the flow gauge (or flow meter) are concerned.

Another drawback encountered in the manufacturing of air filters is the instability of the cartridge within the air filter housing, due to the vibrations generated during use of the vehicle.

The prior art solutions adopted so far for the manufacturing of air filters having filter cartridges do not address how to obtain a uniform path for "clean" air in order to improve the performance of the air filter.

A first object of the invention is therefore to overcome the above-mentioned drawbacks and to provide a filter cartridge for internal combustion engines that is able to obtain a uniform path for the flow of air, so-called clean air.

Another object of the invention is to provide an air filter assembly comprising said cartridge and configured to provide stability to the cartridge when the cartridge is accommodated within the housing, while at the same time facilitating the operations of positioning and centering the filter cartridge within the housing.

A not less important object of the invention is to provide a filter cartridge for internal combustion engine and an air filter assembly comprising said cartridge, which are capable of being manufactured industrially in a cost-effective manner.

These and other objects are achieved with the filter cartridge and the air filter assembly as claimed in the appended claims.

### Summary of Invention

The filter cartridge for an air filter of internal combustion engines, according to the invention, comprises a first closed base and a second open base opposite to the first closed base. The open base is provided with an opening for the exit of filtered air. The filter cartridge further comprises a filter element extending radially between the first closed base and the second open base. The filter element defines a cavity for the passage of an airflow towards the outlet opening provided in the open base. Preferably, the filter element is made of pleated paper. More preferably, the filter cartridge consists of a cylindrical cartridge, wherein the first closed base and the second open base have a perimeter with a substantially circular or oval shape. Preferably, the filter cartridge comprises a support structure between said closed base and said open base, said support structure being adapted to provide support to the filter element 17 extending about said support structure

The function of the filter cartridge is to separate impurities from the flow of dirty air passing through an air filter during operation of the engine with which the filter is associated. The air that comes from the outer environment and has passed through the main cartridge is therefore substantially so-called clean air, i.e. air that can be introduced into the combustion chambers of an internal combustion engine.

According to the invention, the cartridge comprises an air conveyor arranged proximal to the closed base and adapted to direct the airflow towards the second open base. Preferably, the air conveyor is made as a single piece with the closed base of the cartridge. More preferably, the conveyor is defined by a substantially frustoconical element extending within the cavity defined by the filter element and away from the closed base of the cartridge. The frustoconical shape of the conveyor is advantageous in distributing the airflow that has passed through the filter element, thus forming a sort of guide for the airflow towards the outlet opening provided in the open base.

The conveyor has a closed base opposite to the closed base of the cartridge. Preferably, the closed base of the conveyor is flat and arranged parallel to the closed base of the cartridge.

Preferably, the air conveyor is made of plastics. Even more preferably, the air conveyor is hollow in order to reduce the consumption of plastics and to reduce the overall weight of the cartridge. The cavity defined by the air conveyor can be accessed through an opening provided in the open base, said cavity being adapted to receive a corresponding projection provided on a housing of an air filter configured to house the filter cartridge.

According to a preferred embodiment of the invention, the conveyor is made as a single piece with the closed base of the cartridge, and they are both made of polyurethane. Thanks to this measure, the air conveyor is thus flexible and deformable.

Preferably, the air conveyor has a smooth outer surface. By outer surface it is meant a surface facing the inner surface of the filter element and the open base, the conveyor being provided within the cavity defined by the filter element. More preferably, the conveyor has an outer surface provided with a plurality of grooves. Even more preferably, the grooves provided on the outer surface of the conveyor extend helically about the outer surface, in order to facilitate uniform distribution of an airflow towards the open base of the cartridge. More preferably, the grooves provided on the outer surface of the conveyor define a ramp path extending spirally around the conveyor from the closed base of the cartridge. Preferably, the ramp path defined by the grooves has an inclination of 30° to 60°, more preferably of about 45°.

The invention further relates to an air filter assembly for internal combustion engines, said assembly comprising mainly an openable housing, provided with a removable lid or other closing means in order to allow access to the inside of the housing during the operations of installing or replacing a filter cartridge. The housing is further provided with an inlet for an airflow and an outlet for the airflow. The housing defines a compartment adapted to house a replaceable or interchangeable filter element. Advantageously, the interchangeable filter element received within the housing comprises a filter cartridge like the one previously described. Advantageously, the housing further comprises at least one holding member cooperating with the filter cartridge in order to hold the cartridge firmly associated with the housing, in addition to facilitating the operations of introducing and centering the cartridge within the housing.

Preferably, the holding member comprises a projection provided on a bottom surface of the housing and adapted to be housed within the cavity defined by the air conveyor of the filter cartridge and accessible through the opening provided in the closed base. More preferably, the holding member extends substantially frustoconically and is shaped so as to prevent rotation of the filter cartridge when the cartridge is housed within the housing. Even more preferably, the holding member has a shape complementary to the cavity defined by the air conveyor.

As will be apparent from the following description, referring to some preferred embodiments of the invention, the object of the conveyor associated with the cylindrical or annular cartridge is therefore to evenly distribute the airflow in such a way as to improve reading of the airflow at the flow gauge or flowmeter arranged at an intake duct for sucking air from the outlet provided in the housing of the air filter assembly.

### Brief Description of Drawings

Some preferred embodiments of the invention will be described by way of non-limiting examples with reference to the annexed drawings, in which:
Fig. 1 is a sectional perspective view of a filter cartridge according to a first embodiment which is not part of the invention;
Figs. 2-3 are plan views in longitudinal section according to perpendicular longitudinal planes of the cartridge of Fig. 1;
Fig. 4 is a schematic plan view in longitudinal section of an air filter assembly according to the invention, in which the cartridge of Fig. 1 is accommodated;
Fig. 5 is a perspective view of a filter cartridge according to a second embodiment of the invention in which the filter element is shown in a see-through manner.

### Description of Embodiments

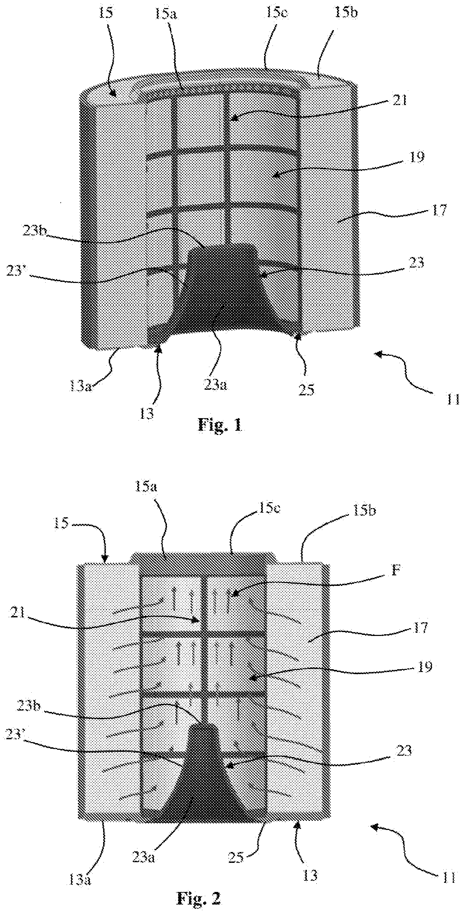

Referring to Figs. 1-3, there is illustrated a filter cartridge for an air filter for internal combustion engines, which is not port of the invention and which has been indicated as a whole with reference numeral 11. The filter cartridge 11 comprises a first closed base 13 and a second open base 15 opposite to the first closed base 13. The open base 15 is provided with an opening 15a for the exit of filtered air. In the illustrated embodiment, the second open base 15 consists of a crown-like base part 15b made of polyurethane or rubber. In addition, the open base 15 has an axial seal 15c capable of a tight sealing action against an end of an air filter housing when the cartridge 11 is accommodated within said housing. The filter cartridge 11 further comprises a filter element 17 extending radially between the first closed base and the second open base. The filter element 17 defines a cavity 19 for the passage of an airflow indicated by arrows "F" in Figs. 2-3, towards the outlet opening 15a provided in the open base 15. In the illustrated embodiment, the filter element 17 is made of pleated paper. Still referring to the illustrated embodiment, the filter cartridge 11 consists of a cylindrical cartridge, wherein the first closed base 13 and the second open base 15 have crown-like base parts 13a, 15a having a substantially oval perimeter. The crown-like base parts 13a, 15b are both made of polyurethane or rubber. In the illustrated embodiment, the filter cartridge 11 further comprises a support structure 21 with a square-meshed net arranged between the closed base 13 and the open base 15 and adapted to provide support to the filter element 17 extending around said support structure 21. In other embodiments, the filter cartridge 11 has no support structure.

The cartridge 11 comprises an air conveyor 23 arranged proximal to the closed base 13 and adapted to direct the airflow F towards the second open base 15. In the illustrated embodiment, the air conveyor 23 is made as a single piece with the closed base 13 of the cartridge 11. Referring again to the illustrated embodiment, the conveyor 23 is defined by a substantially frustoconical element extending within the cavity 19 defined by the filter element 17 and away from the closed base 13 of the cartridge 11. The frustoconical shape of the conveyor 23 is advantageous in distributing the airflow "F" that has passed through the filter element 17, thus forming a guide for the airflow F towards the outlet opening 15a provided in the open base 15. The substantially frustoconical conveyor 23 has a larger cross-section near the closed base 13, said cross-section gradually decreasing as the conveyor 23 extends away from the closed base 13. In the illustrated embodiment, the cross-section has a substantially oval shape, as can be appreciated from Figs. 2-3, wherein the longitudinal section of the conveyor 23 is not constant over perpendicular longitudinal planes of the cartridge 11.

In the illustrated embodiment, the air conveyor 23 is made of plastics and together with the crown-like base part 13a it forms the closed base 13.

In other embodiments, the conveyor 23 is made of polyurethane integrally to the crown-like base part 13a.

In still further embodiments, the conveyor might not be made as a single piece with to the closed base 13.

Referring again to the illustrated embodiment, the air conveyor 23 is hollow in order to reduce the consumption of plastics and to reduce the overall weight of the cartridge 11. The cavity 23a defined by the air conveyor 23 can be accessed through an opening 25 provided in the open base 13, said cavity being adapted to receive a corresponding projection provided on a housing of an air filter configured to house the filter cartridge 11.

Advantageously, when the conveyor 23 and the crown-like base part 13a are made of the same material, i.e. polyurethane, the conveyor 23 is flexible and deformable. Thanks to this measure, mounting the cartridge 11 into an air filter assembly would be possible even when the cavity 23a defined by the conveyor 23 were narrower than the shape of a corresponding projection provided on a housing of an air filter.

In the embodiment shown in Figs. 1-4, the air conveyor has a smooth outer surface 23'. By outer surface it is meant a surface substantially facing the inner surface of the filter element and the open base 15, the conveyor 23 being provided within the cavity 19 defined by the filter element 17.

The conveyor 23 has a closed base 23b opposite to the closed base 13 of the cartridge 11. In the illustrated embodiment, the closed base 23b of the conveyor is flat and arranged parallel to the closed base 13 of the cartridge 11.

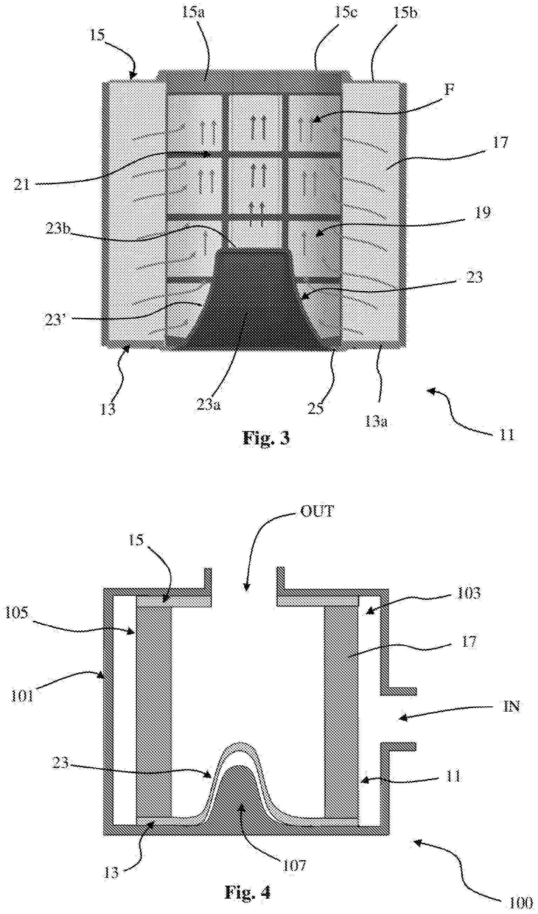

Referring to Fig. 4, the invention further relates to an air filter assembly 100 for internal combustion engines, which assembly comprises mainly an openable housing 101 provided, for example, with a removable lid or other closing means allowing access to the inside of the housing 101 during the operations of installing or replacing a filter cartridge. The housing 101 is further provided with an inlet "IN" for an airflow and an outlet "OUT" for the airflow. The housing 101 defines a compartment 103 adapted to house a replaceable or interchangeable filter element 105. Advantageously, the interchangeable filter element 105 housed within the housing 101 comprises a filter cartridge 11 like the one previously described and illustrated by way of example in Fig. 1.

Advantageously, the housing 101 further comprises at least one projection 107 cooperating with the filter cartridge 11. In the illustrated embodiment, the projection 107 is provided on a bottom surface of the housing 101 and is adapted to be housed within the cavity 23a defined by the air conveyor 23 of the filter cartridge 11 and accessible through the opening 25 provided in the closed base 13. The projection 107 mainly serves to provide support to the hollow air conveyor 23. In addition, the projection 107 provided on the bottom of the housing 101 is also advantageous in the operations of installing or replacing the filter cartridge 11, forming a guide for positioning the cartridge 11 within the housing 101. In the illustrated embodiment, the projection 107 extends substantially frustoconically and is shaped so as to prevent rotation of the filter cartridge 11 when the cartridge 11 is housed within the housing 101. The provision of the projection 107 shaped so as to prevent rotation of the cartridge is also especially advantageous in the operations of positioning and centering the filter cartridge within the housing 101. In the illustrated embodiment, the projection 107 has a shape complementary to the cavity 23a defined by the air conveyor 23, i.e. a substantially frustoconical shape with a substantially oval cross-section. The cross-section of the projection 107 is larger near the bottom surface of the housing 101, said cross-section gradually decreasing as the projection 107 extends away from the bottom surface of the housing 101. This configuration of the projection 107 is especially advantageous in the operations of introducing and centering the cartridge 11, allowing positioning of the cartridge 11 only in two positions rotated by 180° with respect to each other.

In addition to facilitating the operations of introducing and centering the cartridge 11 within the housing 101 upon installation or replacement of the filter cartridge 11, a further advantage of the projection 107 lies in that it allows to hold the cartridge 11 firmly associated within the housing 101, notwithstanding the vibrations to which the filter assembly is subjected during use of the vehicle.

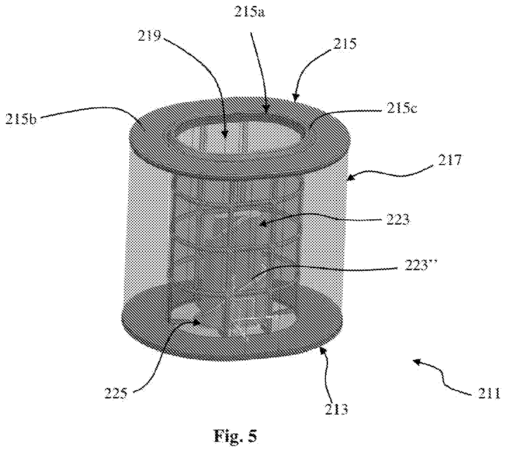

Referring to Fig. 5, there is illustrated a filter cartridge 211 according to the invention, in which the filter element 217 is shown in a see-through manner. The conveyor 223 provided proximal to the closed base 213 extends within the cavity 219 defined by the cartridge 211 from said closed base. In the illustrated embodiment, the conveyor 223 has a substantially frustoconical shape having a cross-section larger near the closed base 213, said cross-section gradually decreasing as the conveyor 223 extends away from the closed base 213.

Advantageously, the outer surface of the conveyor 223 has a plurality of grooves 223" defining a path extending substantially helically around said conveyor 223 having a substantially frustoconical shape, whereby the cross-section of the conveyor 223 gradually decreases as it extends away from the closed base 213. The path defined by the grooves 223" defines a spiral ramp extending about the conveyor 223 from the closed base 213. Referring again to the illustrated embodiment, the ramp path defined by the grooves 223" has an inclination of 30° to 60°, more preferably of about 45°, as can be seen in Fig. 5. The path defined by the grooves 223" provided on the outer surface of the conveyor 223, i.e. on the surface facing the inner surface of the filter element 217, facilitates uniform distribution of the airflow by creating a guide towards the open base 215 of the cartridge 211.
According to the invention, the cartridge 211 can advantageously be housed in a housing like the one shown in Fig. 4, in which an axial projection 107 will be provided having an appropriate shape and preferably complementary to the cavity 223a defined by the conveyor 223 having a helically extending path 223".

The invention as described and illustrated is susceptible to further variants and modifications falling within the same inventive principle.

## Claims

1. Filter cartridge (211) for an air filter for internal combustion engines, comprising a first closed base (213) and a second open base (215) opposite to said first closed base (213) and having an opening (215a) for the exit of filtered air, a filter element (217) extending radially between said first closed base (213) and said second open base (215) and defining a cavity (219) for the passage of an airflow (F), wherein said cartridge (211) comprises an air conveyor (223) arranged proximal to the closed base (213) and adapted to direct the airflow (F) towards the second open base (215), wherein said conveyor (223) has a larger cross-section near the closed base (213), **characterized in that** said conveyor (223) has a closed base opposite to the first closed base (213) of the cartridge, **in that** said conveyor (223) has an outer surface having a plurality of grooves (223") defining a path extending helically around the outer surface of said conveyor (223), so that said cross-section gradually decreases as the conveyor (223) extends away from the closed base (213), and **in that** the path defined by the grooves (223") defines a spiral ramp extending about the conveyor (223) from the closed base (213).

2. Filter cartridge (211) according to claim 1, wherein said conveyor (223) is made as a single piece with the closed base (213) of said cartridge (211).

3. Filter cartridge (211) according to claim 1 or 2, wherein said conveyor (223) is defined by a substantially frustoconical element extending within the cavity (219) defined by said filter element (217) from said closed base (213) of the cartridge (211).

4. Filter cartridge (211) according to any of the preceding claims, wherein the section of the conveyor (223) along longitudinal planes is not constant.

5. Filter cartridge (211) according to claim 4, wherein the cross-section of the conveyor (223) has a substantially oval shape.

6. Filter cartridge (211) according to any of the preceding claims, wherein said conveyor (223) is hollow, and wherein the cavity (223a) defined by the conveyor (223) is accessible through an opening (225) provided in the closed base (213), said cavity (223a) being adapted to house a corresponding projection (107) provided in a housing (101) of an air filter (100) housing said cartridge (211).

7. Filter cartridge (211) according to any of the preceding claims, wherein said filter element (217) is made of pleated paper and extends around a support structure (221) provided in the cartridge (211) between said closed base (213) and said open base (215), providing support to the filter element (217) extending around said support structure (221).

8. Air filter assembly (100) for internal combustion engines, comprising a housing (101) having an inlet ("IN") for an airflow and an outlet for the airflow, a compartment (103) adapted to house a replaceable filter element (105) being defined in said housing, **characterized in that** the replaceable filter element (105) comprises a filter cartridge (211) as claimed in claims 1 to 7, and **in that** said housing (101) comprises a projection (107) cooperating with said filter cartridge (211).

9. Air filter assembly (100) according to claim 8, wherein said projection (107) is provided on a bottom surface of said housing (101) and is adapted to be housed within the cavity (223a) defined by the air conveyor (223) of said filter cartridge (211) to provide support to said hollow conveyor (223).

10. Air filter assembly (100) according to claim 8 or 9, wherein said projection (107) extends substantially frustoconically and is shaped so as to prevent rotation of the filter cartridge (211) when said cartridge (211) is housed within said housing (101).

11. Air filter assembly (100) according to any of claims 8, 9 or 10, wherein said projection (107) has a cross-section with a substantially oval shape.

## Patentansprüche

1. Filterpatrone (211) für einen Luftfilter für Verbrennungsmotoren, mit einer ersten geschlossenen Basis (213) und einer zweiten offenen Basis (215), die der ersten geschlossenen Basis (213) gegenüberliegt und eine Öffnung (215a) für das Austreten gefilterter Luft aufweist, einem Filterelement (217), das sich radial zwischen der ersten geschlossenen Basis (213) und der zweiten offenen Basis (215) erstreckt und einen Hohlraum (219) für den Durchgang eines Luftstroms (F) definiert, wobei die Patrone (211) einen Luftförderer (223) aufweist, der proximal zu der geschlossenen Basis (213) angeordnet und dafür ausgelegt ist, den Luftstrom (F) zu der zweiten offenen Basis (215) hin zuleiten, wobei der Förderer (223) einen größeren Querschnitt in der Nähe der geschlossenen Basis (213) hat, **dadurch gekennzeichnet, dass** der Förderer (223) gegenüber der ersten geschlossenen Basis (213) der Patrone eine geschlossene Basis hat, dass der Förderer (223) eine Außenfläche hat, die mehrere Nuten (223") aufweist, die einen sich wendelförmig um die Außenfläche des Förderers (223) erstreckenden Pfad definieren, so dass sich der Querschnitt mit zunehmender Entfernung des Förderers (223) von der geschlossenen Basis (213) zunehmend verringert, und dass der von den Nuten (223") definierte Pfad eine wendelförmige Rampe definiert, die sich von der geschlossenen Basis (213) aus um den Förderer (223) erstreckt.

2. Filterpatrone (211) nach Anspruch 1, wobei der Förderer (223) einstückig mit der geschlossenen Basis (213) der Patrone (211) ausgebildet ist.

3. Filterpatrone (211) nach Anspruch 1 oder 2, wobei der Förderer (223) durch ein im Wesentlichen kegelstumpfförmiges Element definiert ist, das sich in dem Hohlraum (219), der durch das Filterelement (217) definiert ist, von der geschlossenen Basis (213) der Patrone (211) aus, erstreckt.

4. Filterpatrone (211) nach einem der vorstehenden Ansprüche, wobei der Schnitt des Förderers (223) entlang von Längsebenen nicht konstant ist.

5. Filterpatrone (211) nach Anspruch 4, wobei der Querschnitt des Förderers (223) eine im Wesentlichen ovale Form hat.

6. Filterpatrone (211) nach einem der vorstehenden Ansprüche, wobei der Förderer (223) hohl ist und wobei der Hohlraum (223a), der von dem Förderer (223) definiert ist, durch eine Öffnung (225) zugänglich ist, die in der geschlossenen Basis (213) angeordnet ist, wobei der Hohlraum (223a) dafür ausgelegt ist, einen entsprechenden Vorsprung (107) aufzunehmen, der an einem Gehäuse (101) eines Luftfilters (100), das die Patrone (211) aufnimmt, vorgesehen ist.

7. Filterpatrone (211) nach einem der vorstehenden Ansprüche, wobei das Filterelement (217) aus plissiertem Papier hergestellt ist und sich um eine Trägerstruktur (221) herum erstreckt, die in der Patrone (211) zwischen der geschlossenen Basis (213) und der offenen Basis (215) vorgesehen ist und das Filterelement (217), das sich um die Trägerstruktur (221) herum erstreckt, stützt.

8. Luftfilterbaugruppe (100) für Verbrennungsmotoren, mit einem Gehäuse (101), das einen Einlass ("IN") für eine Luftströmung und einen Auslass für die Luftströmung aufweist, ein in dem Gehäuse definiertes Fach (103), das dafür ausgelegt ist, ein austauschbares Filterelement (105) aufzunehmen, **dadurch gekennzeichnet, dass** das austauschbare Filterelement (105) eine Filterpatrone (211) nach einem der Ansprüche 1 bis 7 enthält, und dass das Gehäuse (101) einen Vorsprung (107) aufweist, der mit der Filterpatrone (211) zusammenwirkt.

9. Luftfilterbaugruppe (100) nach Anspruch 8, wobei der Vorsprung (107) an einer Bodenfläche des Gehäuses (101) vorgesehen und dafür ausgelegt ist, von dem Hohlraum (223a), der von dem Luftförderer (223) der Filterpatrone (211) definiert ist, aufgenommen zu werden, um den hohlen Förderer (223) zu stützen.

10. Luftfilterbaugruppe (100) nach Anspruch 8 oder 9, wobei der Vorsprung (107) sich im Wesentlichen kegelstumpfförmig erstreckt und so geformt ist, dass Drehung der Filterpatrone (211) verhindert wird, wenn die Patrone (211) in dem Gehäuse (101) angeordnet ist.

11. Luftfilterbaugruppe (100) nach einem der Ansprüche 8, 9 oder 10, wobei der Vorsprung (107) einen Querschnitt mit einer im Wesentlichen ovalen Form hat.

## Revendications

1. Cartouche filtrante (211) pour un filtre à air pour moteurs à combustion interne, comprenant une première base fermée (213) et une deuxième base ouverte (215) opposée à ladite première base fermée (213) et ayant une ouverture (215a) pour la sortie de l'air filtré, un élément filtrant (217) s'étendant radialement entre ladite première base fermée (213) et ladite deuxième base ouverte (215) et définissant une cavité (219) pour le passage d'un flux d'air (F), ladite cartouche (211) comprenant un convoyeur d'air (223) agencé proximal à la base fermée (213) et adapté pour diriger le flux d'air (F) vers la deuxième base ouverte (215), dans laquelle ledit convoyeur (223) présente une plus grande coupe près de la base fermée (213), **caractérisée en ce que** ledit convoyeur (223) a une base fermée opposée à la première base fermée (213) de la cartouche, **en ce que** ledit convoyeur (223) a une surface externe ayant une pluralité de rainures (223") définissant un chemin s'étendant de manière hélicoïdale autour de la surface externe dudit convoyeur (223), de sorte que ladite coupe diminue progressivement à mesure que le convoyeur (223) s'éloigne de la base fermée (213), et **en ce que** le chemin défini par les rainures (223'') définit une rampe en spirale s'étendant autour du convoyeur (223) à partir de la base fermée (213).

2. Cartouche filtrante (211) selon la revendication 1, dans laquelle ledit convoyeur (223) est réalisé d'un seul tenant avec la base fermée (213) de ladite cartouche (211).

3. Cartouche filtrante (211) selon la revendication 1 ou 2, dans laquelle ledit convoyeur (223) est défini par un élément sensiblement tronconique s'étendant au sein de la cavité (219) définie par ledit élément filtrant (217) à partir de ladite base fermée (213) de la cartouche (211).

4. Cartouche filtrante (211) selon l'une quelconque des revendications précédentes, dans laquelle la section du convoyeur (223) le long de plans longitudinaux n'est pas constante.

5. Cartouche filtrante (211) selon la revendication 4, dans laquelle la coupe du convoyeur (223) est sensiblement de forme ovale.

6. Cartouche filtrante (211) selon l'une quelconque des revendications précédentes, dans laquelle ledit convoyeur (223) est creux, et dans laquelle la cavité (223a) définie par le convoyeur (223) est accessible par une ouverture (225) ménagée dans la base fermée (213), ladite cavité (223a) étant adaptée pour loger une saillie (107) correspondante ménagée dans un logement (101) d'un filtre à air (100) logeant ladite cartouche (211).

7. Cartouche filtrante (211) selon l'une quelconque des revendications précédentes, dans laquelle ledit élément filtrant (217) est en papier plissé et s'étend autour d'une structure de support (221) prévue dans la cartouche (211) entre ladite base fermée (213) et ladite base ouverte (215), fournissant un support à l'élément filtrant (217) s'étendant autour de ladite structure de support (221).

8. Ensemble de filtre à air (100) pour moteurs à combustion interne, comprenant un logement (101) ayant une entrée (« IN ») pour un flux d'air et une sortie pour le flux d'air, un compartiment (103) adapté pour loger un élément filtrant (105) remplaçable étant défini dans ledit logement, **caractérisé en ce que** l'élément filtrant (105) remplaçable comprend une cartouche filtrante (211) telle que revendiquée dans les revendications 1 à 7, et **en ce que** ledit logement (101) comprend une saillie (107) coopérant avec ladite cartouche filtrante (211).

9. Ensemble de filtre à air (100) selon la revendication 8, dans lequel ladite saillie (107) est prévue sur une surface inférieure dudit logement (101) et est adaptée pour être logée au sein de la cavité (223a) définie par le convoyeur d'air (223) de ladite cartouche filtrante (211) pour fournir un support audit convoyeur creux (223).

10. Ensemble de filtre à air (100) selon la revendication 8 ou 9, dans lequel ladite saillie (107) s'étend sensiblement de manière tronconique et est formée de façon à empêcher la rotation de la cartouche filtrante (211) lorsque ladite cartouche (211) est logée au sein dudit logement (101).

11. Ensemble de filtre à air (100) selon l'une quelconque des revendications 8, 9 ou 10, dans lequel ladite saillie (107) présente une coupe sensiblement de forme ovale.
